# EUROPEAN PATENT APPLICATION

(11) **EP 1 710 738 A1**
(43) Date of publication of application: **11.10.2006**
(21) Application number: 05290766.4
(22) Date of filing: 06.04.2005
(51) Int. Cl.: G06Q 10/00, H04L 12/58

(54) **Method of transmitting messages**

(71) Applicant: ALCATEL, 75008 Paris (FR)
(72) Inventor: Olivier, François, 67115 Plobsheim (FR)
(74) Representative: LOUIS, PÖHLAU, LOHRENTZ

(57) **Abstract**

The invention concerns an electronic communication terminal, a method, and a computer program product for transmitting an electronic message (2) to two or more recipients (30, 31, 40), whereby the message (2) comprises a public component (21, 23) intended for each of the two or more recipients (30, 31, 40) and one or more private components (22, 24, 25), each of the one or more private components (22, 24, 25) intended only for one or more of the two or more recipients (30, 31, 40). The public component and the one or more private components each comprise one or more sections. The public component of the message (2) is replicated and one of the private components is added to the public component to form an individual message (3, 4) intended only for one or more of the two or more recipients (30, 31, 40). Then the different messages (3, 4) are transmitted via a telecommunication network (5) to the respective recipients (30, 31, 40).

## Description

The invention relates to a method of transmitting messages, in particular electronic messages.

Modern telecommunication technologies like, e.g., electronic mail, enable a sender to send off the same electronic message to several recipients at once. With this so-called broadcasting, each recipient of the message receives an identical copy of the original message.

If the sender wishes to add to the message a private remark intended only to a specific person of the several recipients, he must make a copy of the original message, add the private remark to the copy, and send the modified copy only to the specific person. To signalise to the specific recipient that the message contains a private remark which is not contained in the original message received by the other recipients, the sender has to indicate the additional private remarks in a proper way, e.g., with a specific text property (font, bold, slanted, etc.) or simply with an explaining text.

In the case of a greater number of individual recipients, the described method soon becomes cumbersome. It takes a long time to create all the different copies for adding the different remarks to the messages. The handling of the recipients' addresses for a large number of individual messages is prone to mistakes. Moreover, it is difficult and confusing for the sender to archive all the different messages. Consequently, the sender is likely to lose track.

The conventional method described above is also very time-consuming, particularly if the sender discovers shortly before sending the messages that he must correct something in the general part of the messages. He then has to apply the same correction to all the different messages.

It is the object of the present invention to improve the transmission of electronic messages.

The object of the present invention is achieved by an electronic communication terminal comprising a communication unit for transmitting a message via a telecommunication network to two or more recipients, whereby the electronic communication terminal comprises a control unit adapted for storing data of a message comprising a public component intended for each of the two or more recipients and one or more private components, each of the one or more private components intended only for one or more of the two or more recipients, whereby the public component and the one or more private components each comprise one or more sections; searching for markers to identify the beginning and the end of each section of the one or more private components, and determining communication addresses of the one or more recipients the respective private section is intended for based on said markers; composing two or more different electronic messages, each electronic message comprising a copy of the public component, the sections of one of the one or more private components, and the communication addresses corresponding to the sections of said private component; and sending the two or more electronic messages via the telecommunication network to the recipients addressed by the respective communication addresses.

The object of the present invention is further achieved by a method of transmitting a message via a telecommunication network to two or more recipients, the method comprising the steps of storing data of a message comprising a public component intended for each of the two or more recipients and one or more private components, each of the one or more private components intended only for one or more of the two or more recipients, whereby the public component and the one or more private components each comprise one or more sections; searching for markers to identify the beginning and the end of each section of the one or more private components, and determining communication addresses of the one or more recipients the respective private section is intended for based on said markers; composing two or more different electronic messages, each electronic message comprising a copy of the public component, the sections of one of the one or more private components, and the communication addresses corresponding to the sections of said private component; and sending the two or more electronic messages via the telecommunication network to the recipients addressed by the respective communication addresses. And the object of the present invention is further achieved by a computer program product for transmitting a message via a telecommunication network to two or more recipients, the computer program product, when executed by an electronic communication terminal comprising a communication unit and a control unit, performing the steps of storing a message comprising a public component intended for each of the two or more recipients and one or more private components, each of the one or more private components intended only for one or more of the two or more recipients, whereby the public component and the one or more private components each comprise one or more sections; searching for markers to identify the beginning and the end of each section of the one or more private components, and determining communication addresses of the one or more recipients the respective private section is intended for based on said markers; composing two or more different electronic messages, each electronic message comprising a copy of the public component, the sections of one of the one or more private components, and the communication addresses corresponding to the sections of said private component; and sending the two or more electronic messages via the telecommunication network to the recipients addressed by the respective communication addresses.

The invention has the advantage that the memory needed for storage of the message is decreased. Instead of storing two or more individual messages, each with the same public component, the present invention allows to store a single message with once the public component and each of the private components. Therefore, the public component has to be stored only once. As the public component usually contains the biggest part of a message, this may mean a significant saving of memory. However, it is nevertheless possible that the sender saves each different message individually if he wishes to.

Further, the invention has the advantage that the writer/sender of a message always needs to edit only a single message. Therefore, the writer is enabled to apply corrections and amendments in a simple and fast way until the message is sent off.

Further advantages are achieved by the embodiments of the invention indicated by the dependent claims.

According to a preferred embodiment of the invention, the electronic message is not limited to text content where the private components can easily be indicated, e.g., by a particular font. It is also possible that audio messages contain private components which are signalled, e.g., by a jingle, or other acoustic signals. Similarly, messages with video content can contain private video sequences which are indicated, e.g., by colored elements or other screen signs. Therefore, whatever the content of the electronic message be, the addition and indication of private components is possible.

It is possible that an electronic message according to the invention is transmitted as an electronic mail, as a short messaging service, or as a message of instant messaging. It is further possible that the electronic message is a multimedia messaging service or a telephone call of a push-to-talk service. But the invention can also be applied to other electronic messaging services and technologies.

According to a preferred embodiment of the invention, the format of the created electronic messages is fully compatible with the usual message exchange standards. That means that the addition of personal sections and the generation of different messages does not produce any changes in the format of the electronic messages which limit or inhibit their sending according to the common electronic communication standards.

It is further possible that the sender does not wish to enable the recipient to distinguish the original message from the added private components. To the recipient, the received message should look like an integrate message. Then the sender can adjust the generation of messages such that the set markers at the beginning and the end of each section of the one or more private components are not evident to the respective recipient the private section is intended for.

It is possible that the two or more different messages which differ from each other only with regard to their private components are archived as a single message. Then this archived single message contains all the different private components, just like the message which was edited by the sender. It is also possible that the two or more different messages are stored and archived separately as different messages. This might be useful when keeping separate communication accounts for the different recipients. Then it is easier to reconstruct a course of communication with any of the recipients.

Some advantages are achieved if the two or more recipients are stored in an address list. This may be in advance of the editing of the message or during the editing. During editing the message, if the sender wants to add a private section, he can choose the recipients of the current private section from a recipients' menu loaded from the address list. This guarantees a very comfortable way of editing the message. It is also possible that the sender inputs a recipient of a private section before editing the section, during editing or even afterwards.

These as well as further features and advantages of the invention will be better appreciated by reading the following detailed description of presently preferred exemplary embodiments taken in conjunction with accompanying drawings of which:
- Fig. 1: is a block diagram of an electronic communication terminal for creating electronic messages according to a first embodiment of the invention.
- Fig. 2: is a block diagram of messages edited and sent with an electronic communication terminal according to a first embodiment of the invention.
- Fig. 3: is a diagram of a message comprising a public component and two private components according to a first embodiment of the invention.

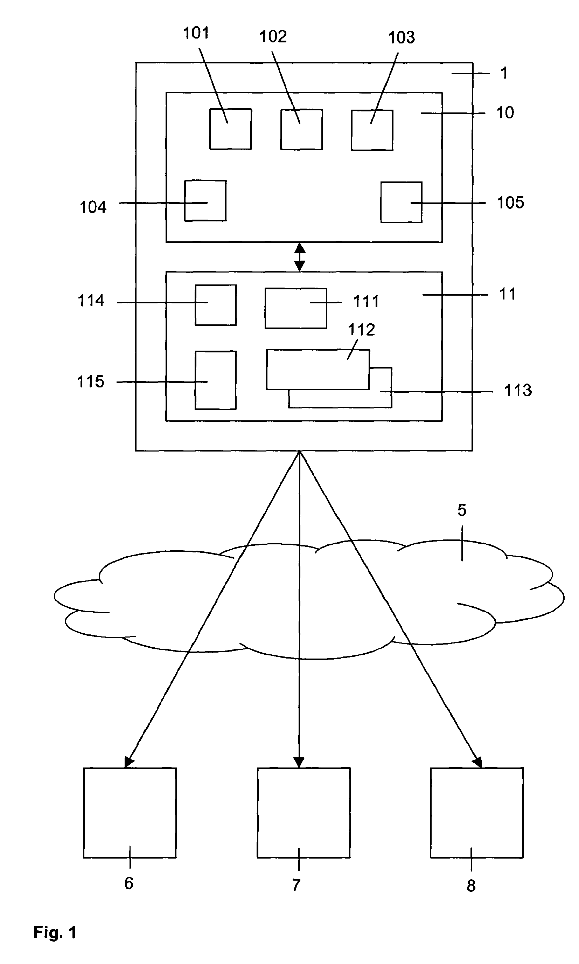

Fig. 1 shows an electronic communication terminal 1 for creating electronic messages according to an embodiment of the invention. The electronic communication unit 1 can be any electronic device which is adapted for communicating via a communication network 5, e.g., a cellular communication network as a GSM or UMTS network, or a fixed wireline telephone network, e.g., a PSTN network (GSM = Global System for Mobile Communications; UMTS = Universal Mobile Telecommunications System; PSTN = Public Switched Telecommunication Network). Preferably, it is a mobile telephone, a PDA, or a personal computer with a modem for access to a telecommunication network (PDA = Personal Digital Assistent).

From a functional point of view, the electronic communication terminal 1 comprises a control unit 10 and a communication unit 11. The control unit 10 assists in creating a message and stores the message. It generates two or more different messages for sending the two or more different messages with help of the communication unit 11 via the telecommunication network 5 to the electronic communication terminals 6, 7, 8 assigned to recipients of the messages. The control unit 10 comprises a processor 101 for controlling the processes within the control unit 10 and for performing tasks with a high demand of computing time, like searching, calculating, etc., a replicator 102 for copying the public component of a message, an assembler 103 for forming two or more different messages from individual parts, a transfer module 104 for transferring the two or more messages to the communication unit 11, and a memory 106 for storing software, recipients' addresses, messages and other data.

The communication unit 11 is adapted to assist a user in editing a message and to transmit the message via the telecommunication network 5 to a recipient. It comprises a controller 111, a transmitter 112, a receiver 113, an input means 114 for inputting information to the communication unit 11, e.g., via a keyboard, and further an output means 115 for output of information, e.g., a screen where the edited text of a message to be sent or a received message can be displayed, or a loudspeaker where a received message with audio content can be listened to. The controller 111 is adapted to control the processes of the communication unit 11, in particular the transmission and the reception of electronic messages by the transmitter 112 and the receiver 113. In a preferred embodiment, the controller 111 also controls the editing of a message.

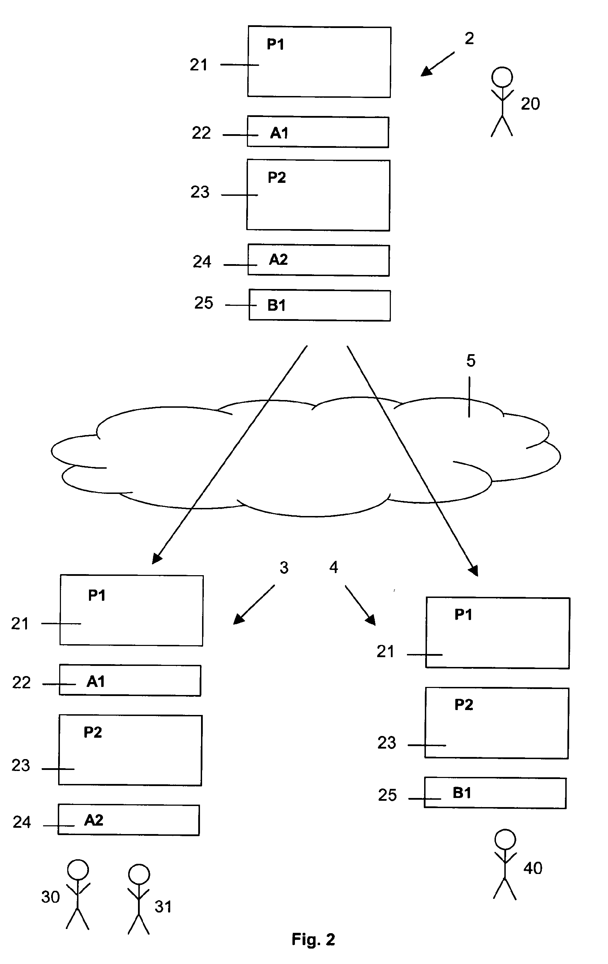

Fig. 2 shows a sender 20 communicating via a telecommunication network 5 like, e.g., an IP network, with recipients 30, 31, 40. Both the sender 20 and the recipients 30, 31, 40 use electronic communication terminals with the functionality as described above with regard to Fig. 1. The sender 20 edits an electronic message 2, e.g., an e-mail comprising a public component and two private components. The public component of the message 2 is intended for all the recipients 30, 31, 40 and comprises two sections 21, 23, the first private component of the message 2 is intended for the recipients 30, 31 and comprises two sections 22, 24, whereas the second private component of the message 2 intended for recipient 40 only comprises one section 25.

The sender 20 uses a communication unit 11, as shown in Fig. 1, comprised within an electronic communication terminal, e.g., a PC, to edit the electronic message 2. He may use an editor separately installed on his electronic communication terminal, or the editor may be comprised in the communication unit 11. The sender 20 uses the input means to input information like, e.g., text to the communication terminal and controls the input information by help of the output means 115 like, e.g., a display. In a first step, the sender defines the communication addresses of all the recipients 30, 31, 40 of the public component of the message 2, e.g., by inputting their e-mail addresses. After writing a first public section 21, the sender 20 presses a pre-defined button on the input means 101, e.g., a shortcut on a keyboard of the electronic communication terminal 1, to indicate to the communication unit 11 that he wants to begin a private section 22 intended only for the recipients 30, 31.

In reaction to the keyboard shortcut, the communication unit 11 triggers that a menu be displayed to the sender 20. The menu lists all the recipients 30, 31, 40 defined by the sender 10, from where he can select a subgroup of recipients 30, 31 the private section 22 is intended for. A marker indicating a private section and the recipients selected for the private section are inserted at the respective position of the message text. The sender writes the private section 22 and closes the section 22 by pressing the shortcut again. Again a marker is inserted at the respective position of the message text. It is possible that several private sections are nested. Then it is essential that the closing marker of a section indicates to which opening marker it refers.

It is possible that the functionality to signal the beginning and the end of private sections, the presentation of a menu for selecting recipients of the private section and the setting of markers in the message is provided by the communication unit 11 or by the communication unit 11 in co-operation with the control unit 10, i.e., that the functionality of the communication unit 11 is expanded through the exchange of data with the control unit 10.

Then, the sender 10 writes a second public section 23, followed by a second private section 24, intended again for the recipients 30, 31. Finally, the sender 10 edits a private section 25 of the message 1 intended for the recipient 40.

After editing the complete message 1, the sender 10 presses a button for sending the message 1. The pressing of the "send" button transfers the control of the message to the control unit 10. The data of the edited message 2 are transferred to the transfer module 104 and from there to the processor 101. The processor searches for the marked private sections and determines the respective communication addresses, arranges them according to their communication addresses, i.e., their recipients and stores the data, i.e., sections 21, 23 of the public component of the message 2 and the sections 22, 24, 25 of the private components in the memory 105. The replicator 102 is triggered by the processor 101 to generate copies of the public component and store them in the memory 105. The total number of copies of the public component, i.e., the sum of the original copy and the replicated copies, is equal to the number of private components.

In the example described herein, the sender 20 intends to send to two different parties of recipients. He has edited two different private components. Then the replicator will generate one copy of the public component 21, 23, so that the total number of the copies comprising the public component is two.

The assembler 103 then composes new messages by assembling the new messages from individual parts stored in the memory 105. Each of the assembled messages 3, 4 contains the public component. One message 3 of the assembled messages additionally contains the private component intended for the recipients 30, 31, the other message 4 of the assembled messages additionally contains the private component intended for the recipient 40. The assembler 103 makes sure that the position of the sections of the private components in the assembled messages 3, 4 with respect to the sections of the public components 21, 23 is identical to the original message edited by the sender 20. The new messages 3, 4 also contain the communication addresses of their respective recipients.

The assembler 103 is enabled to generate the messages 3, 4 because the intended recipients 30, 31, 40 of the private sections 22, 24, 25 have been indicated with markers by pressing the shortcut.

Then the generated messages 3, 4 are transferred to the communication unit 11 and transferred via the communication network 5 to the respective recipients, i.e., the message 3 to the recipients 30, 31 and the message 4 to the recipient 40.

The message 3 received by the recipients 30, 31 comprises the public sections 21, 23 and the private sections 22, 24 of the private component intended for the recipients 30, 31. The message 4 received by the recipient 40 comprises the public sections 21, 23 and the private section 25 of the private component intended for the recipient 40.

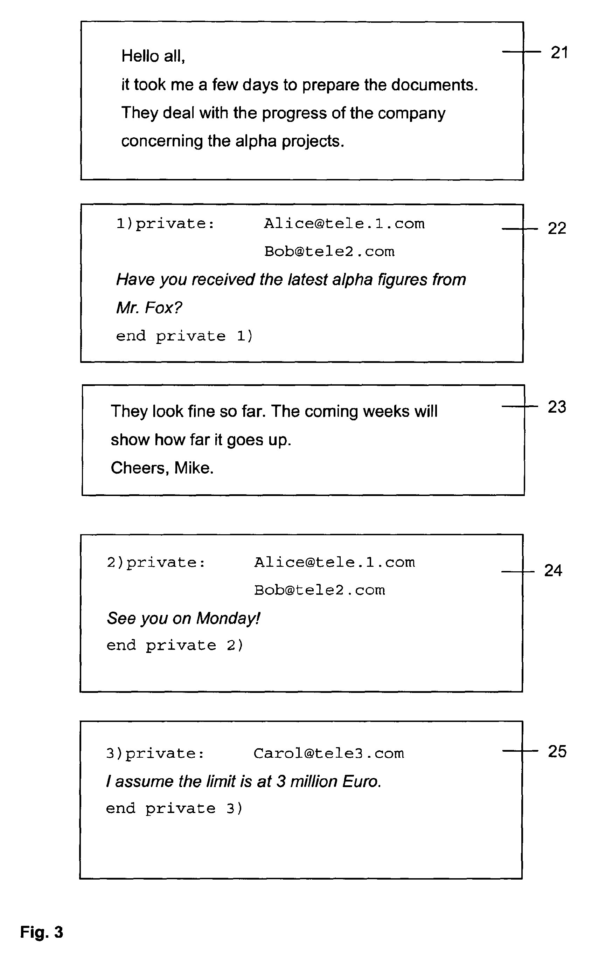

Fig. 3 shows an example of an e-mail according to the example described above, i.e., an e-mail comprising a public component and two private components. The public component of the message 2 is intended for all the recipients 30, 31, 40 and comprises the two sections 21, 23, the first private component of the message 2 is intended for the recipients 30, 31 and comprises the two sections 22, 24, whereas the second private component of the message 2 - intended for the recipient 40 only - comprises the section 25.

## Claims

1. An electronic communication terminal (1) comprising a communication unit (11) for transmitting a message via a telecommunication network (5) to two or more recipients (30, 31, 40),
**characterised in**
**that** the electronic communication terminal (1) comprises a control unit (10) adapted for storing data of a message (2) comprising a public component intended for each of the two or more recipients (30, 31, 40) and one or more private components, each of the one or more private components intended only for one or more of the two or more recipients (30, 31, 40), whereby the public component and the one or more private components each comprise one or more sections (21 to 25); searching for markers to identify the beginning and the end of each section (22, 24, 25) of the one or more private components, and determining communication addresses of the one or more recipients (30, 31, 40) the respective private section (22, 24, 25) is intended for based on said markers; composing two or more different electronic messages (3, 4), each electronic message (3, 4) comprising a copy of the public component, the sections (22, 24, 25) of one of the one or more private components, and the communication addresses corresponding to the sections (22, 24, 25) of said private component; and sending the two or more electronic messages (3, 4) via the telecommunication network (5) to the recipients (30, 31, 40) addressed by the respective communication addresses.

2. The electronic communication terminal of claim 1,
**characterised in**
**that** the messages (2, 3, 4) comprise text content and/or audio content and/or video content and/or other multi-media content.

3. The electronic communication terminal of claim 1,
**characterised in**
**that** the control unit (10) is adapted for composing the electronic messages (3, 4) according to one of the following message formats: electronic mail format, short messaging service format, instant messaging format, multimedia messaging service format, push-to-talk format.

4. The electronic communication terminal of claim 1,
**characterised in**
**that** the control unit (10) is adapted for composing the electronic messages (3, 4) in full compatibility with the usual message exchange standards.

5. The electronic communication terminal of claim 1,
**characterised in**
**that** the control unit (10) is adapted for composing one or more of the electronic messages (3, 4) such that the public component and the private component of the message (3, 4) are presented to the recipient (30, 31, 40) of the message (3, 4) in an identical form.

6. The electronic communication terminal of claim 1,
**characterised in**
**that** the control unit (10) is adapted for composing one or more of the electronic messages (3, 4) such that a section (22, 24, 25) of a private component is displayed to the recipient (30, 31, 40) with different text properties or is indicated to the recipient (30, 31, 40) by an acoustic signal.

7. A method of transmitting a message via a telecommunication network (5) to two or more recipients (30, 31, 40),
**characterised in**
**that** the method comprises the steps of:
storing data of a message (2) comprising a public component intended for each of the two or more recipients (30, 31, 40) and one or more private components, each of the one or more private components intended only for one or more of the two or more recipients (30, 31, 40), whereby the public component and the one or more private components each comprise one or more sections (21 to 25);
searching for markers to identify the beginning and the end of each section (22, 24, 25) of the one or more private components, and
determining communication addresses of the one or more recipients (30, 31, 40) the respective private section (22, 24, 25) is intended for based on said markers;
composing two or more different electronic messages (3, 4), each electronic message (3, 4) comprising a copy of the public component, the sections (22, 24, 25) of one of the one or more private components, and the communication addresses corresponding to the sections of said private component;
sending the two or more electronic messages (3, 4) via the telecommunication network (5) to the recipients addressed by the respective communication addresses.

8. The method of claim 7,
**characterised in that** the method comprises the further step of:
archiving the two or more electronic messages (3, 4) separately as different messages and/or integrated as a single message.

9. The method of claim 7,
**characterised in that** the method comprises the further step of:
registering the two or more recipients (30, 31, 40) in a distribution list; selecting the one or more recipients (30, 31, 40) a private component is intended for as a subset of the distribution list.

10. A computer program product for transmitting a message via a telecommunication network (5) to two or more recipients (30, 31, 40),
**characterised in**
**that** the computer program product, when executed by an electronic communication terminal (1) comprising a communication unit (11) and a control unit (10), performs the steps of:
storing data of a message (2) comprising a public component intended for each of the two or more recipients (30, 31, 40) and one or more private components, each of the one or more private components intended only for one or more of the two or more recipients (30, 31, 40), whereby the public component and the one or more private components each comprise one or more sections (21 to 25);
searching for markers to identify the beginning and the end of each section (22, 24, 25) of the one or more private components, and
determining communication addresses of the one or more recipients (30, 31, 40) the respective private section (22, 24, 25) is intended for based on said markers;
composing two or more different electronic messages (3, 4), each electronic message (3, 4) comprising a copy of the public component, the sections (22, 24, 25) of one of the one or more private components, and the communication addresses corresponding to the sections (22, 24, 25) of said private component;
sending the two or more electronic messages (3, 4) via the telecommunication network (5) to the recipients (30, 31, 40) addressed by the respective communication addresses.
